**Europäisches Patentamt**

**European Patent Office**

**Office européen des brevets**

(19)

(11) Numéro de publication : **0 414 763 B1**

(12)

# FASCICULE DE BREVET EUROPEEN

(45) Date de publication du fascicule du brevet :
**18.03.92 Bulletin 92/12**

(51) Int. Cl.$^5$ : **B62D 11/20,** B62D 55/065

(21) Numéro de dépôt : **89905704.6**

(22) Date de dépôt : **26.04.89**

(86) Numéro de dépôt international :
**PCT/FR89/00199**

(87) Numéro de publication internationale :
**WO 89/10290 02.11.89 Gazette 89/26**

(54) **VEHICULE TELECOMMANDE A CHENILLES POUR TRANSPORT DE CHARGES ET/OU FOURNITURE D'ENERGIE DANS DES ZONES DIFFICILES D'ACCES OU DANGEREUSES POUR L'HOMME.**

(30) Priorité : **26.04.88 FR 8805724**

(43) Date de publication de la demande :
**06.03.91 Bulletin 91/10**

(45) Mention de la délivrance du brevet :
**18.03.92 Bulletin 92/12**

(84) Etats contractants désignés :
**AT BE CH DE FR GB IT LI LU NL SE**

(56) Documents cités :
**EP-A- 0 252 674**
**DE-A- 2 053 092**
**DE-A- 3 135 485**
**DE-A- 3 514 375**

(56) Documents cités :
**FR-A- 2 553 349**
**US-A- 3 447 619**
**US-A- 3 455 405**
**US-A- 3 848 690**
**US-A- 4 616 724**

(73) Titulaire : **MANCHERON, Daniel**
**RN 8, Les Chabauds**
**F-13320 Bouc-Bel-Air (FR)**

(72) Inventeur : **MANCHERON, Daniel**
**RN 8, Les Chabauds**
**F-13320 Bouc-Bel-Air (FR)**

(74) Mandataire : **Marek, Pierre**
**28 & 32 rue de la Loge**
**F-13002 Marseille (FR)**

**EP 0 414 763 B1**

**Description**

La présente invention concerne un véhicule télécommande à quatre chenilles destiné au transport de charges et/ou à la fourniture d'énergie dans des zones difficiles d'accès ou dangereuses pour l'homme, sans personne à bord.

On connait bien des véhicules tout-terrain capables de se déplacer sur des terrains accidentés et dont le train de roulement est constitué de quatre chenilles.

Ces véhicules connus ont pour inconvénients :
– de nécessiter la présence d'au moins un conducteur pour le pilotage desdits véhicules ;
– de n'offrir, de la sorte, aucune sécurité pour la vie du personnel embarqué afin d'accomplir des tâches dangereuses.

Des véhicules de ce genre sont, par exemple, décrits dans le document EP-A-0.252.674 correspondant au préambule de la revnedication 1, ces véhicules étant en outre affectés d'un certain nombre d'inconvénients supplémentaires tels que :
– l'obligation de prévoir deux centrales de fourniture d'énergie : l'une pour assurer les déplacements du véhicule, l'autre pour permettre l'entraînement de l'outillage ou des machines embarquées ;
– la nécessite d'utiliser au moins deux pompes hydrauliques ;
– la difficulté de synchronisation des moteurs hydrauliques découlant de la gestion manuelle des différentiels et du fait que ces pompes sont à débit fixe et que lesdits moteurs sont montés en parallèle ;
– un mauvais suivi du terrain par le train de roulement ;
– leur médiocre manoeuvrabilité en terrain très difficile.

La présente invention a notamment pour objet de remédier aux inconvénients et insuffisances susmentionnés des véhicules tout-terrain actuels.

Selon l'invention, cet objectif est atteint par la mise en oeuvre d'un procédé ou dispositif suivant lequel le véhicule supporté et mû par un ensemble de quatre chenilles indépendantes dont deux au moins constituant le train avant ou le train arrière dudit véhicule, sont orientables, ce véhicule étant remarquable par le fait qu'il comporte un dispositif électronique de pilotage différentiel des quatre chenilles, ce dispositif électronique déterminant la vitesse de chaque chenille en fonction : - de sa position, du fait qu'elle soit orientable ou non, de la géométrie du véhicule, de la consigne de vitesse (Vo) et de l'angle de direction du train orientable.

Selon une autre disposition caractéristique, une centrale d'énergie unique alimente simultanément ou non la motricité du véhicule et l'outillage embarqué à bord dudit véhicule.

Le véhicule à chenilles indépendantes selon l'invention a principalement pour avantages :
– de permettre le déplacement de charges dans les zones difficiles d'accès tel que terrains de pente supérieure à 40 degrés ;
– de permettre la fourniture d'énergie à une gamme étendue d'outillage ;
– de mettre en sécurité le personnel de conduite ;
– de pouvoir être utilisé dans de nombreux domaines tels que : travaux publics, travaux en montagne, travaux forestiers, travaux agricoles, pétrochimie, protection civile, applications militaires, etc.

Les buts, caractéristiques et avantages susmentionnés et d'autres encore, ressortiront mieux de la description qui suit et des dessins annexés dans lesquels :

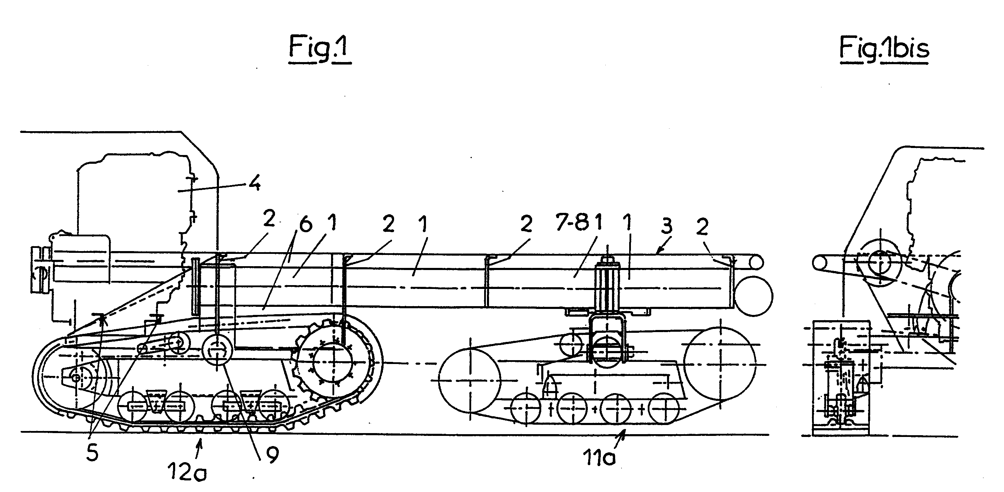

La figure 1 est une vue en élévation d'un véhicule équipé de quatre chenilles indépendantes selon un premier exemple d'exécution de l'invention.

La figure 1bis est une vue de côté et en demi-coupe de la figure 1.

La figure 2 est une vue en plan de la figure 1.

La figure 3 est une vue schématique illustrant un exemple d'articulation du train de chenilles avant.

La figure 4 est une vue schématique illustrant la constitution d'un banc de chenilles.

La figure 5 est un schéma d'un exemple de réalisation d'un sous-ensemble hydraulique.

La figure 6 est une vue schématique d'ensemble du dispositif de contrôle-commande.

La figure 7 est un schéma détaillé des circuits électroniques de commande des chenilles.

La figure 8 est un schéma de principe d'asservissement des chenilles en boucle fermée.

On décrit ci-après, successivement :
– la conception mécanique et cinématique du véhicule.
– un exemple de réalisation du sous-ensemble énergie.
– le dispositif de contrôle-commande électrique.

Conception mécanique et cinématique du véhicule.

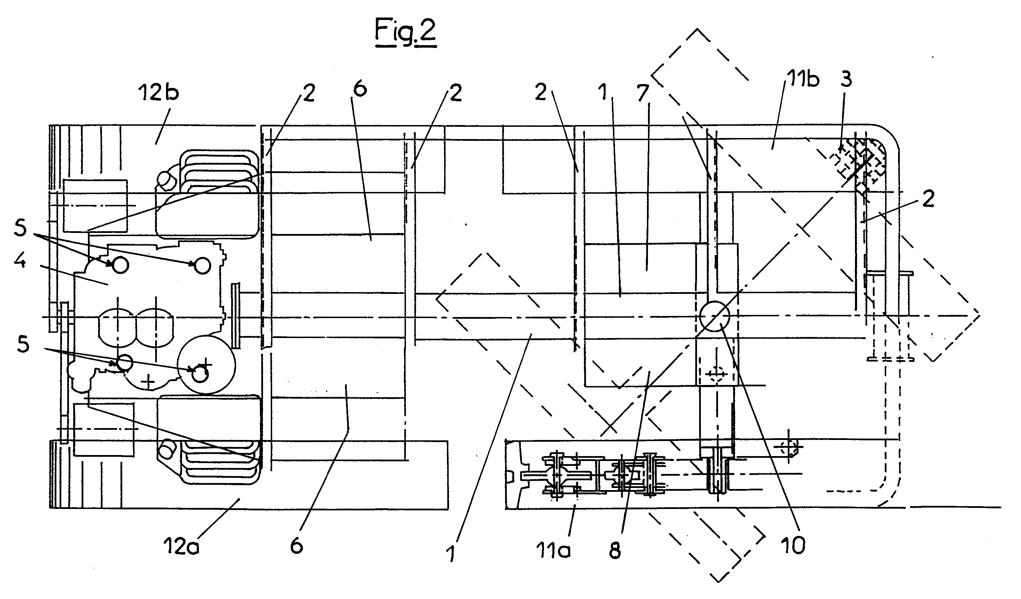

Comme le montrent les figures 1 et 2, le véhicule à chenilles indépendantes selon l'invention comprend un châssis supporté par quatre chenilles 11a - 11b, 12a - 12b dont deux au moins constituant le train avant ou le train arrière dudit véhicule, sont orientables, ces dernières étant constituées, de préférence, par les deux chenilles 11a, 11b du train avant. Chaque chenille est mue par un moteur hydraulique indépendant.

Le châssis du véhicule est composé d'une poutre centrale 1 de section carrée ou toute autre section, sur laquelle vient reposer un ensemble de varangue 2 recevant le plateau de chargement 3.

Le châssis supporte, dans sa partie arrière un moteur diesel 4, par exemple de 46 CV, monté sur amortisseur en caoutchouc 5 ou autres.

Une caisse à huile hydraulique 6, par exemple d'une capacité de 110 litres, repose sur la poutre centrale, à l'arrière. Un compartiment 7 destiné à la réception des équipements électriques et des batteries 8 est aménagé à l'avant.

Un tube de section cylindrique 9 est fixé solidairement de la poutre centrale à l'arrière, dans sa partie inférieure. Il sert de support aux deux bancs de chenilles arrières. Un dispositif connu en soi permet de faire varier la voie arrière du véhicule, c'est-à-dire l'écartement entre les chenilles du train arrière dudit véhicule.

La poutre centrale est percée sensiblement au quart avant et supporte le palier de direction 10.

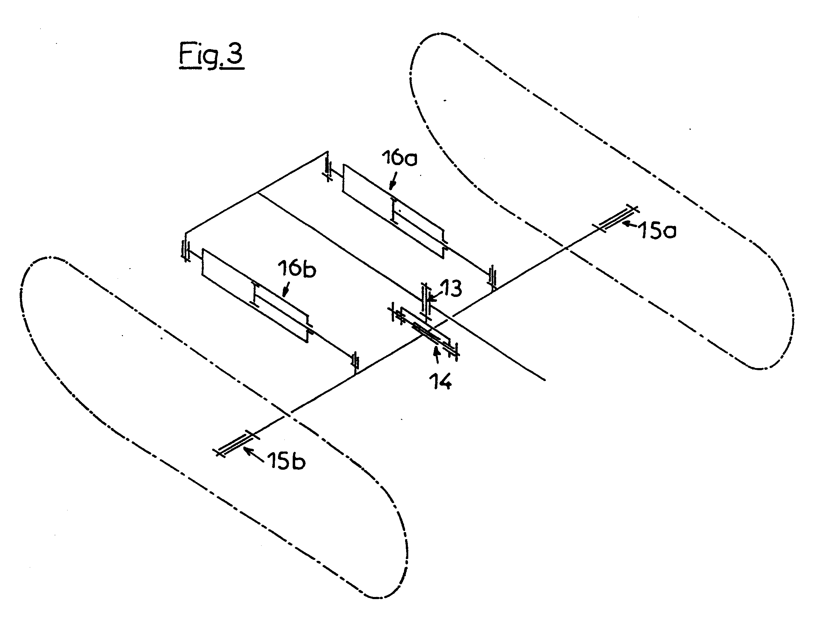

La figure 3 montre un exemple d'articulation du train de chenilles avant. L'agencement illustré comprend :

— un axe vertical 13 permettant l'orientation en direction des deux chenilles avant.

— un axe longitudinal 14 permettant de garder le contact avec le sol en cas de forte déclivité latérale.

— des axes transversaux 15a et 15b permettant le suivi longitudinal du terrain.

— des vérins hydrauliques 16a et 16b commandant la direction du train avant.

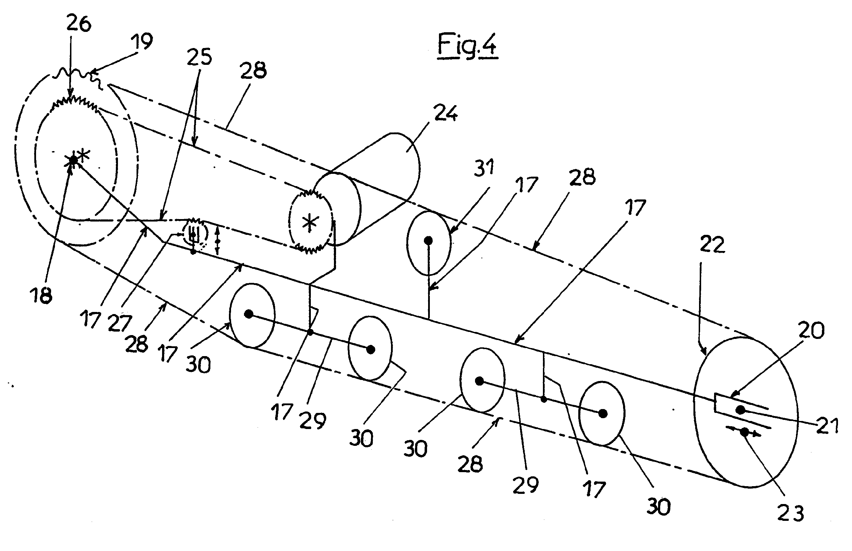

Comme le montre le schéma de la figure 4, chaque banc de chenille est constitué d'un châssis en tôle mécano-soudé 17. Ce châssis supporte, à l'avant, l'axe 18 du barbotin 19. Dans sa partie arrière, deux échancrures en forme de "U" 20 couché à l'horizontale, font fonction de glissières dans lesquelles viennent coulliser deux paliers 21 supportant l'axe du galet arrière 22 du banc de chenille. Ces deux paliers à position réglable dans la direction longitudinale, assurent la tension de la chenille au moyen d'un système vis-écrou 23.

Un moteur hydraulique 24 situé sur le quart avant du banc entraîne le barbotin 19 par l'intermédiaire d'une chaîne 25 et d'un pignon ou couronne 26 solidaire dudit barbotin. Un pignon réglable en position 27, assure la tension de la chaîne.

Le barbotin 19 entraîne la chenille 28.

Des boggies 29 sur lesquels sont fixés des galets 30, permettent à la chenille de garder un contact permanent avec le sol.

Un galet 31 permet à la chenille de ne pas flotter en sa partie supérieure.

Exemple de réalisation du sous-ensemble énergie.

Selon l'invention, la centrale d'énergie du véhicule est utilisée pour assurer à la fois, ensemble ou séparément, la propulsion du véhicule, c'est-à-dire l'alimentation des moteurs hydrauliques 24 (figure 4) assurant l'entraînement des bancs de chenilles, et le fonctionnement des outillages équipant ledit véhicule (par exemple : bras manipulateur, tronçonneuse, pompe à eau, canons à eau ; perforateurs, marteaux, etc.).

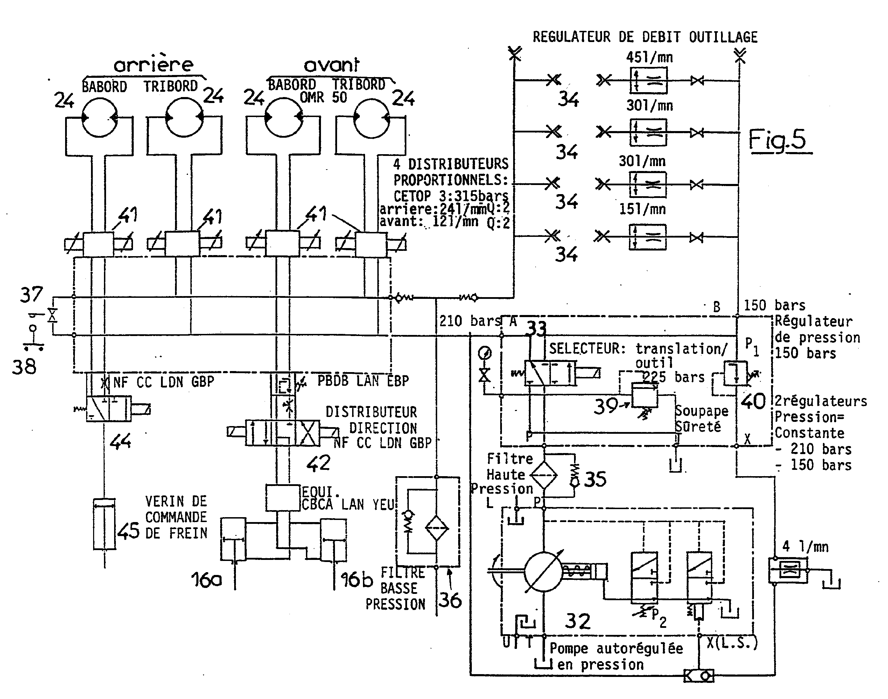

La figure 5 représente un exemple de réalisation d'un sous-ensemble hydraulique et de ses organes électro-mécaniques d'asservissement, assurant :

— la conversion de l'énergie mécanique du moteur diesel 4 (figures 1 et 2) en énergie hydraulique par entraînement d'une unique pompe 32 auto-régulée en pression et en débit, apte à assurer, à la fois, l'entraînement des organes de roulement du véhicule et celui des outillages divers qui peuvent équiper celui-ci, en fonction de sa destination.

— la distribution de l'énergie hydraulique produite par la pompe 32, à travers un selecteur 33, soit vers les moteurs de translation 24, soit vers les prises d'outillage extérieur 34, soit vers les deux à la fois.

Ce dispositif ou sous-ensemble comprend encore notamment :

— deux filtres destinés à éliminer les impuretés du fluide hydraulique, soit :

— un filtre haute-pression 35 ;
— un filtre basse-pression 36 ;

— une vanne de circulation 37 permettant le démarrage du moteur diesel avec une pompe hydraulique n'étant pas en charge ;

— un contacteur électrique 38 n'autorisant le démarrage du moteur que si la vanne 37 est en position ouverte ;

— une soupape de sécurité 39 évitant les surpressions du circuit hydraulique (225 bars) ;

— un régulateur de pression 40 qui, lorsque le selecteur 33 est dans la position autorisant l'alimentation des outils extérieurs 34, fait chuter la pression hydraulique, par exemple à 150 bars ;

— quatre électro-distributeurs proportionnels 41 alimentant les moteurs hydrauliques 24 des chenilles en fonction du courant de commande appliqué aux bobines solénoïdes de ces électro-distributeurs ;

— un électro-distributeur 42 à deux positions de travail (gauche, droite) et une position de repos, permettant de commander les deux vérins de direction 16a, 16b du train de chenille avant 11a et 11b ;

— un électro-distributeur 44 permettant de piloter le vérin de commande de frein 45 du véhicule.

Dispositif de contrôle-commande électrique.

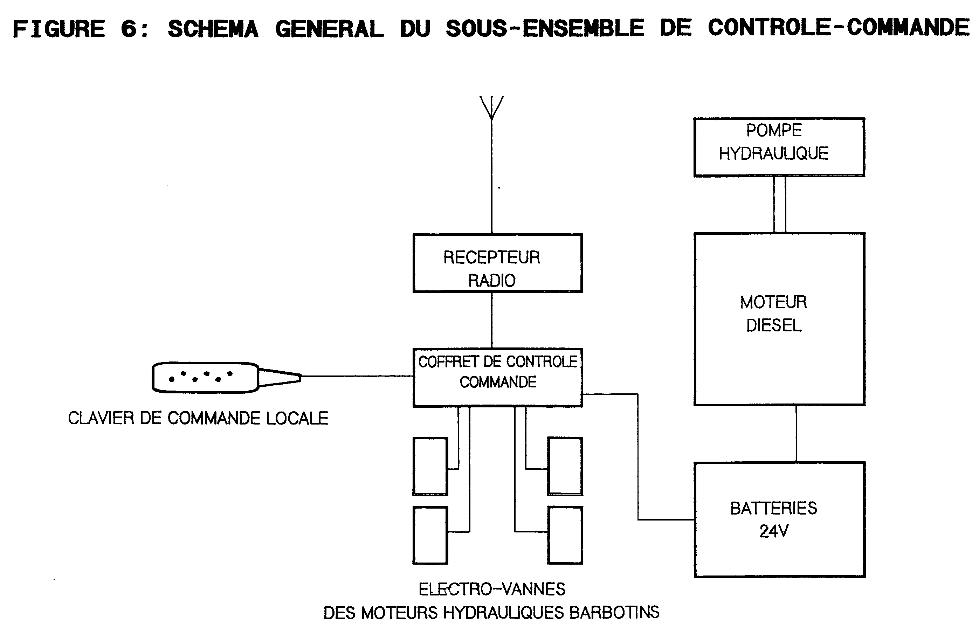

La figure 6 est une vue d'ensemble du dispositif de contrôle-commande.

La difficulté de la commande des quatre chenilles indépendantes réside dans le fait qu'elles ont des vitesses différentes lorsque le véhicule est en virage.

Soit Vo = vitesse de base. On démontre que les vitesses respectives des chenilles sont :
– chenille avant intérieure au virage
$$V1 = Vo (1 - A \times SIN (D)/2 \times E)$$
– chenille avant extérieure au virage
$$V2 = Vo (1 + A \times SIN (D)/2 \times E)$$
– chenille arrière intérieure au virage
$$V3 = Vo (Cos (D) - B \times SIN(D)/2 \times E)$$
– chenille arrière extérieure au virage
$$V4 = Vo (Cos (D) + B \times SIN(D)/2 \times E)$$
Formules dans lesquelles on a :

A = distance entre barbotins des chenilles avant.

B = distance entre barbotins des chenilles arrière.

E = Entraxe des essieux.

D = Angle de direction.

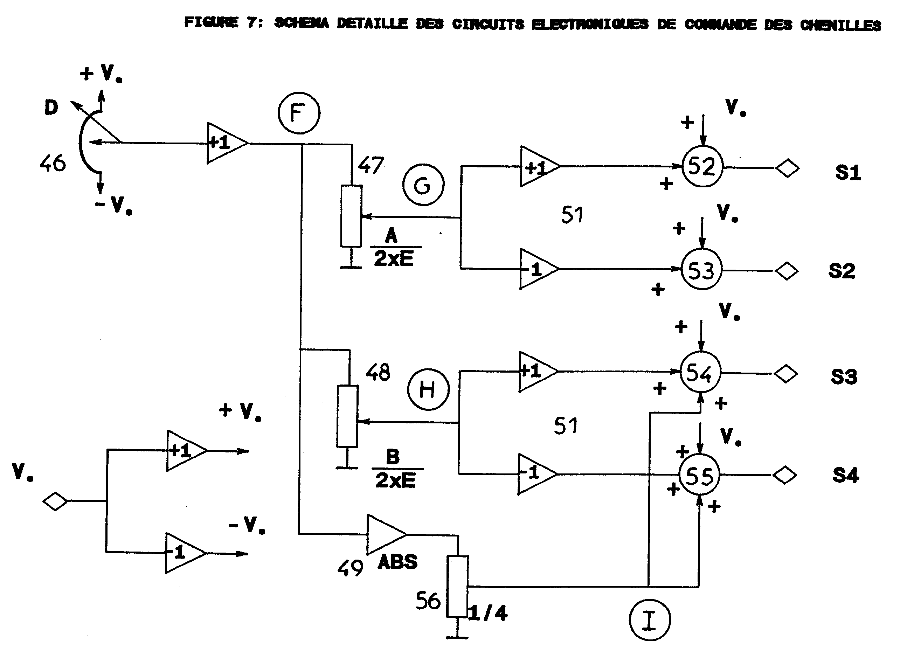

La figure 7 représente une carte électronique permettant de générer les signaux électriques de consigne des électro-vannes à commande proportionnelle, en fonction de la consigne de vitesse Vo et de l'angle de direction "D".

La constitution de cette carte électronique et son principe de fonctionnement sont les suivants :
– Un potentiomètre 46 génère une tension au point "F", égale à l'angle d'orientation du train avant "D" multipliée par la consigne de vitesse Vo.
– un pont diviseur à résistance 47 permet de disposer en "G" d'une tension égale à Vo (D x A)/(2 x E).
– un pont diviseur à résistance 48 permet de disposer en "H" d'une tension égale à Vo (D x B)/(2 x E).
– Un circuit redresseur 49 suivi d'un pont diviseur 50 permet de disposer en "I" d'une tension égale à la valeur absolue de D/4 multipliée par la consigne de vitesse Vo.
– Les circuits 51 permettent d'additionner ou soustraire une valeur unité aux signaux "G" et "H".
– Un sommateur 52 en sortie S1 duquel on dispose d'un signal égal à:
$$S1 = Vo (1 - (A \times D)/(2 \times E) )$$
– Un sommateur 53 en sortie S2 duquel on dispose d'un signal égal à :
$$S2 = Vo (1 + (A \times D)/(2 \times E) )$$
– Un sommateur 54 en sortie S3 duquel on dispose d'un signal égal à :
$$S3 = Vo (1 - ABS(D)/4 - (B \times D)/(2 \times E) )$$
– Un sommateur 55 en sortie S4 duquel on dispose d'un signal égal à :
$$S4 = Vo (1 - ABS(D)/4 + (B \times D)/(2 \times E) )$$
Les signaux S1, S2, S3 et S4 sont respectivement les signaux de commande des électrovannes proportionnelles ou électro-distributeurs proportionnels des chenilles :
– Avant gauche (S1)

– Avant droite (S2)
– Arrière gauche (S3)
– Arrière droit (S4)

Il est facile de vérifier par le calcul que ces signaux S1, S2, S3 et S4 "approximent" ou approchent les valeurs des vitesses V1, V2, V3 et V4. Les erreurs sont inférieures à 5 % pour des angles de direction inférieurs à 35 degrés.

Le dispositif électronique qui vient d'être décrit permet le pilotage différentiel des quatre chenilles, avec prise en compte du chemin réel parcouru par chacune d'elles.

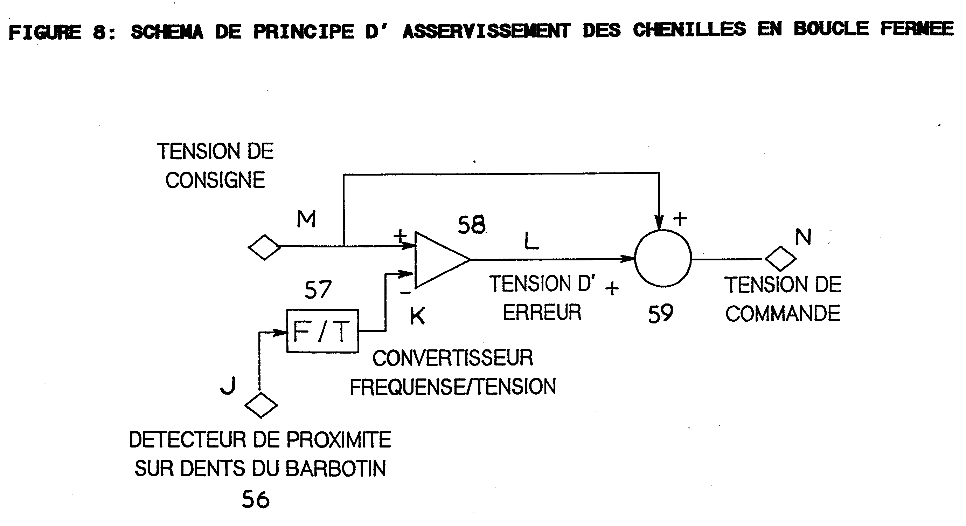

La figure 8 précise la constitution et le principe de fonctionnement de l'asservissement en boucle-fermée de la vitesse des chenilles.

Un détecteur de proximité 56 situé sur chaque banc de chenille, devant le barbotin, génère une tension alternative "J" à chaque passage d'une dent du barbotin ou de la couronne ou pignon 26 (figure 4) d'entraînement de ce dernier.

Un convertisseur fréquense-tension 57 génère une tension continue "K" proportionnelle à la vitesse de rotation du barbotin.

Un circuit comparateur 58 calcule le signal d'erreur L entre la tension de consigne M et la mesure K :
$$Erreur L = M-K$$
Un circuit additionneur 59 génère une tension de commande "N" qui pilote la servo-vanne proportionnelle 41 (figure 5) du train de chenille correspondant.

Ce dispositif présente l'avantage, qu'en cas de perte d'adhérence d'une chenille avec le sol, de ne pas la faire tourner à vide, en absorbant tout le débit hydraulique de la pompe. En effet, si K est supérieur à M, L sera négatif et, le signal de commande N sera diminué, en assurant le ralentissement de la chenille.

Le véhicule ainsi asservi se conduit avec beaucoup de souplesse et chaque train chenillé reçoit toute la puissance qu'il peut utiliser pour propulser l'engin.

Il peut être télécommandé :
– soit par l'intermédiaire d'un câble ;
– soit par l'intermédiaire d'un dispositif de radio-commande classique.

## Revendications

1. Véhicule à chenilles, destiné au transport de charge et/ou à la fourniture d'énergie dans des zones difficiles d'accès ou dangereuses pour l'homme, et supporté par un ensemble de quatre bancs de chenilles (11a, 11b ; 12a, 12b), entraînés, chacun, par un moteur hydraulique d'entraînement indépendant (24) ; chaque banc de chenille du train directeur (11a-11b) ; 12a-12b) étant orientable en direction, et de préférence, également orientable en déport longitudinal, autour d'un axe transversal (15a, 15b) ; caractérisé en ce qu'il comporte un dispositif électronique de pilotage différentiel des quatre chenilles (11a, 11b ; 12a, 12b), ce dispositif électronique déterminant la vitesse de chaque chenille en fonction : - de sa position, du fait qu'elle soit orientable ou non, de la géométrie du véhicule, de la consigne de vitesse Vo et de l'angle de direction du train orientable.

2. Véhicule à chenilles télécommandé suivant la revendication 1, comportant un train avant orientable et un train arrière non orientable, caractérisé en ce que ce dispositif électronique comprend :

– un potentiométre (46) permettant de générer une tension au point "F", égale à l'angle d'orientation (D) du train avant multiplié par la consigne de vitesse Vo ;

– un pont diviseur à résistance (47) permettant de disposer en "G" d'une tension égale à Vo (D x A)/(2 x E) ;

– un pont diviseur à résistance (48) permettant de disposer en "H" d'une tension égale à Vo (D x B)/(2 x E) ;

– un circuit redresseur (49) suivi d'un pont diviseur (50), permettant de disposer en "I" d'une tension égale à la valeur absolue de D/4 multipliée par la consigne de vitesse Vo ;

– des circuits (51) permettant d'additionner ou soustraire une valeur unité aux signaux "G" et "H" ;

– un sommateur (52) en sortie S1 duquel on dispose d'un signal égal à :

$$S1 = Vo (1 - (A \times D)/(2 \times E) ) ;$$

– un sommateur (53) en sortie S2 duquel on dispose d'un signal égal à :

$$S2 = Vo (1 + (A \times D)/(2 \times E) ) ;$$

– un sommateur (54) en sortie S3 duquel on dispose d'un signal égal à :

$$S3 = Vo (1 - ABS(D)/4 - (B \times D)/(2 \times E) ) ;$$

– un sommateur (55) en sortie S4 duquel on dispose d'un signal égal à :

$$S4 = Vo (1 - ABS(D)/4 + (B \times D)/(2 \times E) ) ;$$

les signaux S1, S2, S3 et S4 étant respectivement les signaux de commande des électrovannes proportionnelles ou électro-distributeurs proportionnels des chenilles :

– Avant gauche (S1)
– Avant droite (S2)
– Arrière gauche (S3)
– Arrière droite (S4)

étant précisé que, dans les formules ci-dessus :

– A = distance entre barbotins des chenilles avant ;
– B = distance entre barbotins des chenilles arrière ;
– E = entraxe des essieux ;
– D = angle de direction.

3. Véhicule à chenilles télécommandé, selon l'une des revendications 1 ou 2, caractérisé en ce qu'il comprend un dispositif d'asservissement en boucle fermée de la vitesse des chenilles, ce dispositif comprenant :

– un détecteur de proximité (56) situé sur chaque banc de chenille, devant le barbotin (19), permettant de générer une tension alternative (J) à chaque passage d'une dent du barbotin (19) ou de la couronne ou pignon d'entraînement (26) de ce dernier ;

– un convertisseur fréquense-tension (57) permettant de générer une tension continue (K) proportionnelle à la vitesse de rotation du barbotin (19) ;

– un circuit comparateur (58) permettant de calculer le signal d'erreur (L) entre la tension de consigne (M) et la mesure (K) ;

– un circuit additionneur (59) permettant de générer une tension de commande (N) qui pilote la servo-vanne proportionnelle (41) du train de chenille correspondant.

4. Véhicule télécommandé à chenilles suivant la revendication 1, caractérisé en ce que la centrale d'énergie dudit véhicule est utilisée pour assurer à la fois, ensemble ou séparément, la propulsion du véhicule et le fonctionnement des outillages équipant celui-ci.

5. Véhicule télécommandé à chenilles selon la revendication 4, caractérisé en ce qu'il comprend un sous-ensemble hydraulique assurant la conversion de l'énergie mécanique du moteur en énergie hydraulique et la distribution de l'énergie hydraulique, soit vers les moteurs de translation (24), soit vers les branchements (34) d'outillage extérieur, soit vers les deux à la fois, ce sous-ensemble hydraulique comprenant :

– une unique pompe (32) auto-régulée en pression et en débit, entraînée par le moteur diesel du véhicule ;

– un sélecteur (33) permettant de distribuer l'énergie hydraulique soit vers les moteurs de translation (24) du véhicule, soit vers les branchements (34) des outillages équipant celui-ci, soit vers les deux à la fois ;

– une vanne de circulation (37) permettant le démarrage du moteur diesel avec une pompe hydraulique n'étant pas en charge ;

– un contacteur électrique (38) n'autorisant le démarrage du moteur que si la vanne (37) est en position ouverte ;

– un régulateur de pression (40) qui, lorsque le sélecteur (33) est dans la position autorisant l'alimentation des outils extérieurs (34), fait chuter la pression hydraulique ;

– quatre électro-distributeurs proportionnels (41) alimentant les moteurs hydrauliques (24) des chenilles en fonction du courant de commande appliqué aux bobines solénoides desdits électro-distributeurs ;

– un électro-distributeur (42) à deux positions de travail (gauche, droite) et une position de repos, permettant de commander les deux vérins de direction (16a, 16b) du train de chenille avant (11a, 11b).

6. Véhicule télécommandé à chenilles selon la revendication, 5, caractérisé en ce qu'il comprend un électro-distributeur (44) permettant de piloter le vérin de frein (45) dudit véhicule.

7. Véhicule à chenilles suivant la revendication 1, caractérisé en ce que le train directeur (11a, 11b ; 12a-12b) orientable en direction, est également orientable en déport latéral, autour d'un axe longitudinal (14).

## Patentansprüche

1. Raupenfahrzeug für den Ladungstran.sport und/oder die Energielieferung in für den Menschen schwer zugängliche oder gefährliche Gebiete, getragen durch eine Konstruktion von vier Kettenlaufwerken (11a, 11b, 12a, 12b), die jeweils durch einen unabhängigen hydraulischen Antriebsmotor (24) angetrieben werden, wobei jedes Kettenlaufwerk des Lenkfahrwerkes (11a-11b); (12a-12b) in der Richtung und vorzugsweise auch in der Längsversetzung um eine Querachse (15a, 15b) lenkbar ist, dadurch gekennzeichnet, daß es eine elektronische Vorrichtung zur differentiellen Steuerung der vier Kettenlaufwerke (11a, 11b, 12a, 12b) aufweist, wobei diese elektronische Vorrichtung die Geschwindigkeit jedes Kettenlaufwerkes entsprechend seiner Position, der Tatsache, ob es lenkbar ist oder nicht, der Geometrie des Fahrzeugs, des Einstellwerts der Geschwindigkeit Vo und des Richtungswinkels des lenkbaren Fahrwerks bestimmt.

2. Ferngesteuertes Raupenfahrzeug nach Patentanspruch 1, mit einem lenkbaren vorderen Fahrwerk und einem nicht lenkbaren hinteren Fahrwerk, dadurch gekennzeichnet, daß diese elektronische Vorrichtung umfaßt:
   – ein Potentiometer (46), das es ermöglicht, am Punkt "F" eine Spannung zu erzeugen, die gleich ist dem Drehwinkel (D) des vorderen Fahrwerks multipliziert mit dem Einstellwert der Geschwindigkeit Vo;
   – einen Brückenwiderstandsteiler (47), der es ermöglicht, bei "G" eine Spannung anzulegen, die gleich Vo (D x A)/(2 x E) ist;
   – einen Brückenwiderstandsteiler (48), der es ermöglicht, bei "H" eine Spannung anzulegen, die gleich Vo (D x B)/(2 x E) ist;
   – einen Gleichrichterschaltkreis (49), an den sich ein Brückenteiler (50) anschließt, wodurch ermöglicht wird, bei "I" eine Spannung anzulegen, die gleich dem Absolutwert von D/4 multipliziert mit dem Einstellwert der Geschwindigkeit Vo ist;
   – Schaltkreise (51), die es ermöglichen, einen Einheitswert zu den Signalen "G" und "H" zu addieren oder von ihnen abzuziehen;
   – einen Summator (52) am Ausgang S1, an dem ein Signal gleich
      S1 = Vo (1 - (A x D)/(2 x E) ) verfügbar ist;
   – einen Summator (53) am Ausgang S2, an dem ein Signal gleich
      S2 = Vo (1 + (A x D)/(2 x E) ) verfügbar ist;
   – einen Summator (54) am Ausgang S3, an dem ein Signal gleich
      S3 = Vo (1 - ABS(D)/4 - (B x D)/(2 x E) ) verfügbar ist;
   – einen Summator (55) am Ausgang S4, an dem ein Signal gleich
      S4 = Vo (1 - ABS(D)/4 + (B x D)/(2 x E) ) verfügbar ist;
wobei die Signale S1, S2, S3 und S4 jeweils die Steuersignale der entsprechenden Elektroventile oder entsprechenden Elektroverteiler der Kettenlaufwerke sind:
   – vorne links (S1)
   – vorne rechts (S2)
   – hinten links (S3)
   – hinten rechts (S4)
wobei in den oben angegebenen Formeln folgendes gilt:
   – A = Abstand zwischen Kettenrädern der vorderen Kettenlaufwerke;
   – B = Abstand zwischen Kettenrädern der hinteren Kettenlaufwerke;
   – E = Achsabstand
   – D = Richtungswinkel.

3. Ferngesteuertes Raupenfahrzeug nach einem der Patentansprüche 1 oder 2, dadurch gekennzeichnet, daß es einen geschlossenen Regelkreis zur Regelung der Geschwindigkeit der Kettenlaufwerke aufweist, wobei diese Vorrichtung umfaßt:
   – einen Näherungsschalter (56), der sich an jedem Kettenlaufwerk vor dem Kettenrad (19) befindet und es ermöglicht, bei jedem Passieren eines Zahns des Kettenrades (19) oder dessen Antriebskegelrads oder -ritzels (26) eine Wechselspannung (J) zu erzeugen;
   – einen Frequenz-Spannungs-Wandler (57), der es ermöglicht, eine zur Drehgeschwindigkeit des Kettenrades (19) proportionale Gleichspannung (K) zu erzeugen;
   – einen Vergleichsschaltkreis (55), der es ermöglicht, das Fehlersignal (L) zwischen der Sollspannung (M) und dem Meßwert (K) zu berechnen;
   – einen Additionsschaltkreis (59), der es ermöglicht, eine Steuerspannung (N) zu erzeugen, die das entsprechende Servoventil (41) des entsprechenden Kettenlaufwerkes steuert.

4. Ferngesteuertes Raupenfahrzeug nach Patentanspruch 1, dadurch gekennzeichnet, daß die zentrale Energieversorgung dieses Fahrzeugs dazu eingesetzt wird, um gleichzeitig den Antrieb des Fahrzeugs sowie den Betrieb der Geräte, mit denen dieses Fahrzeug ausgestattet ist, gemeinsam oder getrennt zu gewährleisten.

5. Ferngesteuertes Raupenfahrzeug nach Patentanspruch 4, dadurch gekennzeichnet, daß es ein hydraulisches Bauteil enthält, das die Umwandlung der mechanischen Energie des Motors in hydraulische Energie sowie die Verteilung der hydraulischen Energie gewährleistet, entweder auf die Fahrmotoren (24) oder auf die Anschlüsse (34) der Außengeräte oder auf beide gleichzeitig, wobei dieses hydraulische Bauteil umfaßt:

– eine einzige Pumpe (32), bei der sowohl Druck als auch Förderleistung automatisch geregelt sind und die durch den Dieselmotor des Fahrzeugs angetrieben wird;

– einen Selektor (33), der es ermöglicht, die hydraulische Energie entweder auf die Fahrmotoren (24) des Fahrzeugs oder auf die Anschlüsse (34) der dieses Fahrzeug ausstattenden Geräte oder auf beide gleichzeitig zu verteilen;

– ein Zirkulationsventil (37), das den Start des Dieselmotors mit einer hydraulischen, nicht unter Last stehenden Pumpe ermöglicht;

– einen elektrischen Schalter (38), der den Start des Motors erst dann erlaubt, wenn sich das Ventil (37) in offener Stellung befindet,

– einen Druckregler (40), der den hydraulischen Druck sinken läßt, wenn sich der Selektor (33) in der Stellung befindet, die eine Speisung der äußeren Geräte (34) erlaubt;

– vier entsprechende Elektroverteiler (41), die die Hydraulikmotoren (24) der Raupen entsprechend dem bei den Solenoidspulen dieser Elektroverteiler anliegenden Steuerstrom versorgen;

– einen Elektroverteiler (42) mit zwei Arbeitsstellungen (links, rechts) und einer Ruhestellung, der es ermöglicht, die beiden Richtungsstellglieder (16a, 16b) des vorderen Kettenlaufwerks (11a, 11b) zu steuern.

6. Ferngesteuertes Raupenfahrzeug nach Patentanspruch 5, dadurch gekennzeichnet, daß es einen Elektroverteiler (44) aufweist, der die Steuerung des Bremsstellglieds (45) dieses Fahrzeugs ermöglicht.

7. Raupenfahrzeug nach Patentanspruch 1, dadurch gekennzeichnet, daß beim lenkbaren Fahrwerk (11a, 11b; 12a-12b), dessen Richtung einstellbar ist, auch die seitliche Versetzung um eine Längsachse (14) eingestellt werden kann.

## Claims

1. Vehicle with caterpillar tracks intended for carrying loads and/or supplying power in areas where access is difficult or dangerous for man, and supported by a set of 4 banks of caterpillar tracks (11a, 11b; 12a, 12b), each powered by an independent hydraulic drive motor (24); each caterpillar track of the steering carriage (11a-11b); 12a-12b) being directionally adjustable and preferably also turning in longitudinal displacement around a transverse axis (15a, 15b); characterised by the fact that it contains an electronic device for differential piloting of the four caterpillars (11a, 11b; 12a, 12b), which determines the speed of each caterpillar depending on: - its position, whether it is adjustable or not, the geometry of the vehicle, the speed reference value Vo and the angle of direction of the adjustable carriage.

2. Remote controlled caterpillar vehicle as per claim 1, comprising an adjustable front carriage and a non-adjustable rear carriage, characterised by the fact that this electronic device comprises:

– a potentiometer (46) making it possible to generate voltage at point "F" equal to the angle of adjustment (D) of the front carriage multiplied by the speed reference value Vo;

– a dividing resistor bridge (48) making it possible to have current equal to Vo (D x B)/(2 x E) at "H";

– a rectifier circuit (49) followed by a dividing bridge (50), making it possible to have a voltage equal to the absolute value of D/4 multiplied by the speed reference value Vo at "I";

– circuits (51) making it possible to add or subtract a unit valve to the signals "G" and "H";

– a summing integrator (52) at exit S2 from which there is a signal equal to:

$$S1 = Vo (1 - (A \times D)/(2 \times E));$$

– a summing integrator (53) at exit S2 from which there is a signal equal to:

$$S2 = Vo (1 + (A \times D)/(2 \times E));$$

– a summing integrator (54) at exit S3 from which there is a signal equal to: .

$$S3 = Vo (1 - ABS(D)/4 - (B \times D)/(2 \times E));$$

– a summing integrator (55) at exit S4 from which there is a signal equal to:

$$S4 = Vo (1 - ABS(D)/4 + (B \times D)/(2 \times E));$$

Signals S1, S2, S3 and S4 respectively being the command signals for the electric proportional valves or the proportional electro-distributors of the caterpillars:

– front left (S1)

– front right (S2)

– rear left (S3)

– rear right (S4)

having specified that in the following formulae:

– A = distance between the sprocket wheels of the front caterpillars

– B = distance between the sprocket wheels of the rear caterpillars

– E = distance between the axles;

– D = angle of direction.

3. Remote-controlled caterpillar vehicle, a per one of claims 1 or 2, characterised by the fact that it comprises a closed loop servo-device for the speed of the caterpillars, this device comprising:

– a proximity detector (56) located on each caterpillar track, in front of the sprocket wheel (19), making it possible to generate alternating current (J) at each passage of the tooth of the sprocket wheel (19) or the drive crown or pinion (26) of the latter;

– a frequency-voltage converter (57) making it possible to generate direct current (K) proportional to the speed of rotation of the sprocket-wheel (19);

– a comparator circuit (58) making it possible to calculate the error signal (L) between the set voltage (M) and the measurement (K);

– an adding circuit (59) making it possible to generate a command voltage (N) which pilots the proportional servo-valve (41) of the corresponding caterpillar carriage.

4. Remote-controlled caterpillar vehicle as per claim 1, characterised by the fact that the power centre of the aforesaid vehicle is used to ensure simultaneously, either together or separately, the propulsion of the vehicle and the running of the tools it is equipped with.

5. Remote-controlled caterpillar vehicle as per claim 4, characterised by the fact that it comprises a hydraulic subassembly ensuring the conversion of the mechanical energy of the motor into hydraulic energy and the distribution of the hydraulic energy, either towards the translation motors (24) of the vehicle or towards the junctions (34) of the tools equipping it, or towards both at the same time;

– a circulation valve making it possible to start up the diesel motor with a hydraulic pump with no load;

– an electric contactor (38) which only authorises the start-up of the motor if the valve (37) is in the open position;

– a pressure regulator (40) which, when the selector (33) is in the position authorising power supply to the external tools (34), causes the hydraulic pressure to drop; .

– four proportional electro-distributors (41) supplying the hydraulic motors (24) of the caterpillars in proportion to the command current applied to the solenoid windings of the aforesaid electro-distributors;

– an electro-distributor (42) with two working positions (left, right) and a resting position, making it possible to command the two directional jacks (16a, 16b) of the front caterpillar carriage (11a, 11b).

6. Remote-controlled caterpillar vehicle as per claim 5, characterised by the fact that it comprises an electro-distributor (44), making it possible to pilot the braking screw (45) of the aforesaid vehicle.

7. Caterpillar vehicle as per claim 1, characterised by the fact that the steering carriage (11a, 11b; 12a-12b), whose direction is adjustable, is also adjustable in its lateral displacement, around a longitudinal axis (14).

# Fig.1

# Fig.1bis

EP 0 414 763 B1

# Fig.2

EP 0 414 763 B1

Fig.3

15a

16a

13

14

16b

15b

Fig.4

Fig.5

REGULATEUR DE DEBIT OUTILLAGE

# FIGURE 6: SCHEMA GENERAL DU SOUS-ENSEMBLE DE CONTROLE-COMMANDE

POMPE HYDRAULIQUE

RECEPTEUR RADIO

MOTEUR DIESEL

COFFRET DE CONTROLE COMMANDE

CLAVIER DE COMMANDE LOCALE

BATTERIES 24V

ELECTRO-VANNES
DES MOTEURS HYDRAULIQUES BARBOTINS

EP 0 414 763 B1

FIGURE 7: SCHEMA DETAILLE DES CIRCUITS ELECTRONIQUES DE COMMANDE DES CHENILLES

**FIGURE 8: SCHEMA DE PRINCIPE D' ASSERVISSEMENT DES CHENILLES EN BOUCLE FERMEE**

TENSION DE CONSIGNE

M

58

L

TENSION D' ERREUR

+

59

+

N

TENSION DE COMMANDE

57

F / T

K

CONVERTISSEUR FREQUENSE/TENSION

J

DETECTEUR DE PROXIMITE SUR DENTS DU BARBOTIN

56